# EUROPEAN PATENT SPECIFICATION

(11) **EP 3 444 314 B1**
(45) Date of publication and mention of the grant of the patent: **31.03.2021**
(21) Application number: 17782402.6
(22) Date of filing: 11.04.2017
(51) Int. Cl.: D06M 15/277, D06M 15/295, C08F 220/24, C08F 226/04, C08L 33/14, C09D 133/08

(54) **WATER-REPELLENT COMPOSITION AND PROCESS FOR PRODUCING MOISTURE PERMEABLE WATERPROOF FILM COATED ARTICLE**
WASSERABWEISENDE ZUSAMMENSETZUNG UND VERFAHREN ZUR HERSTELLUNG EINES MIT FEUCHTIGKEITSDURCHLÄSSIGER WASSERDICHTER FILM BESCHICHTETEN ARTIKELS
COMPOSITION HYDROFUGE ET PROCÉDÉ SERVANT À LA PRODUCTION D'UN ARTICLE REVÊTU D'UN FILM IMPERMÉABLE À L'EAU ET PERMÉABLE À L'HUMIDITÉ

(30) Priority: 15.04.2016 JP 2016082000
(43) Date of publication of application: 20.02.2019
(73) Proprietor: AGC INC., Chiyoda-ku, Tokyo 1008405 (JP)
(72) Inventor: SUGIYAMA, Kazunori, Tokyo 100-8405 (JP); INOUE, Hiroaki, Tokyo 100-8405 (JP); OOMORI, Yuuichi, Tokyo 100-8405 (JP); HARA, Hiroyuki, Tokyo 100-8405 (JP)
(74) Representative: Müller-Boré & Partner Patentanwälte PartG mbB
(86) International application number: PCT/JP2017/014865
(87) International publication number: WO 2017/179589

(56) References cited:
- EP-A1- 2 172 530
- WO-A1-2009/104728
- WO-A1-2010/101091
- WO-A1-2015/080026
- WO-A1-2015/080060
- WO-A1-2015/080060
- JP-A- H0 649 319
- JP-A- 2002 220 539
- JP-A- 2014 237 827

## Description

### TECHNICAL FIELD

The present invention relates to a water repellent composition, and a process for producing a moisture permeable waterproof film coated article by using the water repellent composition.

### BACKGROUND ART

As a method for imparting water repellency to the surface of an article (a fiber product, etc.), a method of treating the article by using a water repellent composition having dispersed in a medium a copolymer having structural units based on a monomer having a polyfluoroalkyl group, is known.

In an article (a fiber product such as a sportswear) treated by a water repellent composition, there may be a case where a moisture permeable waterproof film is provided on the surface, in order to impart a function to release moisture by perspiration from the body and a function to prevent penetration of rain (Patent Document 1). The moisture permeable waterproof film coated article is produced, for example, by applying a coating liquid containing a polyurethane resin, an acrylic resin, etc. on the surface of the article treated by a water repellent composition. In the moisture permeable waterproof film coated article, it is required that the moisture permeable waterproof film is not easily peeled off.

As water repellent compositions having an effect to prevent peeling of a coated resin, for example, water repellent compositions of the following (1) and (2) have been proposed.
(1) an aqueous dispersion type fluorinated copolymer composition comprising a copolymer having structural units based on a monomer having a polyfluoroalkyl group and structural units based on a monomer having no polyfluoroalkyl group and no carboxy group, and a polyamine copolymer having an amino group or an ammonium salt group in its side chain (Patent Document 2).
(2) a water/oil repellent composition containing essentially a copolymer consisting substantially of structural units based on a monomer having a polyfluoroalkyl group, of which the melting point of fine crystals derived from the polyfluoroalkyl groups of a homopolymer is not present or is at most 50°C, and structural units based on a monomer having an organic group other than a polyfluoroalkyl group, of which the melting point of fine crystals derived from the organic groups of a homopolymer is at least 30°C (Patent Document 3).

### PRIOR ART DOCUMENTS

### PATENT DOCUMENTS

Patent Document 1: JP-A-H07-229070
Patent Document 2: Japanese Patent No. 4608783
Patent Document 3: WO02/083809

### DISCLOSURE OF INVENTION

### TECHNICAL PROBLEM

In a moisture permeable waterproof film coated article (a fiber product such as a sportswear), even slight lifting of the moisture permeable waterproof film from the surface of the article becomes problematic. Therefore, in recent years, demand for preventing peeling of the moisture permeable waterproof film is becoming stricter.

However, the article treated by the water repellent composition (1) or (2) was not one capable of sufficiently satisfying such a strict requirement.

The present invention is to provide a water repellent composition whereby it is possible to obtain such a moisture permeable waterproof film coated article that the moisture permeable waterproof film is less likely to be peeled from the article treated by the water repellent composition, and a process for producing a moisture permeable waterproof film coated article.

### SOLUTION TO PROBLEM

The present invention has the following embodiments.
<1> A water repellent composition characterized by comprising a copolymer (A) having structural units based on the following monomer (a) and structural units based on the following monomer (b), a polymer (B) having an amino group, an ammonium salt group or an amide group as a pendant group (but excluding the same one as the copolymer (A)), and an aqueous medium,
   Monomer (a): a compound represented by the following formula (m1):

      R^{F}-Q-Z-C(O)C(R)=CH₂ (m1).

      wherein R^{F} is a C₄₋₆ perfluoroalkyl group, Q is a divalent hydrocarbon group having no fluorine atom, or a single bond, Z is -O- or NH-, and R is a hydrogen atom, a methyl group or a chlorine atom,
   Monomer (b): a (meth)acrylate having no polyfluoroalkyl group and having a C₁₂₋₂₂ alkyl group;
   wherein, in the polymer (B), the structural units based on a monomer having at least one type of group selected from the group consisting of an amino group, an ammonium salt group and an amide group are at least one type of structural units selected from the group consisting of the following structural units (u1) to (u17) as defined below.
<2> The water repellent composition according to <1>, wherein the mass ratio ((A)/(B)) of the copolymer (A) to the polymer (B) is from 100/0.01 to 100/10.
<3> The water repellent composition according to <1> or <2>, wherein the proportion of the structural units based on the monomer (a) is from 5 to 95 mass% in all structural units (100 mass%) based on monomers constituting the copolymer (A).
<4> The water repellent composition according to any one of <1> to <3>, wherein the proportion of the structural units based on the monomer (b) is from 5 to 95 mass% in all structural units (100 mass%) based on monomers constituting the copolymer (A).
<5> The water repellent composition according to any one of <1> to <4>, wherein the mass average molecular weight of the polymer (A) is from 1,000 to 500,000.
<6> The water repellent composition according to any one of <1> to <5>, wherein the mass average molecular weight of the polymer (B) is from 1,000 to 200,000.
<7> The water repellent composition according to any one of <1> to <6>, wherein the monomer (a) is F(CF₂)₆CH₂CH₂OC(O)C(CH₃)=CH₂.
<8> The water repellent composition according to any one of <1> to <7>, wherein the monomer (b) is stearyl (meth)acrylate or behenyl (meth)acrylate.
<9> The water repellent composition according to any one of <1> to <8>, wherein the copolymer (A) further has structural units based on a monomer (c) of a halogenated olefin, and structural units based on a monomer (d) having a cross-linkable functional group.
<10> The water repellent composition according to any one of <1> to <9>, which contains a non-ionic surfactant and a cationic surfactant.
<11> The water repellent composition according to any one of <1> to <10>, wherein the aqueous medium is water, or a mixed medium of water and a water-soluble medium.
<12> The water repellent composition according to any one of <1> to <11>, wherein the solid content is from 10 to 40 mass% in the water repellent composition (100 mass%).
<13> A treatment liquid of water repellent composition having water or another medium mixed to the water repellent composition as defined in any one of <1> to <12>.
<14> The treatment liquid of water repellent composition according to <13>, wherein the solid content is from 0.1 to 8 mass% in the water repellent composition (100 mass%).
<15> A process for producing a moisture permeable waterproof film coated article, comprising treating an article by the water repellent composition as defined in any one of <1> to <12> to form a moisture permeable waterproof film on the surface of the article.

### ADVANTAGEOUS EFFECTS OF INVENTION

According to the water repellent composition of the present invention, it is possible to obtain such a moisture permeable waterproof film coated article that the moisture permeable waterproof film is less likely to be peeled from the article treated by the water repellent composition. According to the process for producing a moisture permeable waterproof film coated article of the present invention, it is possible to obtain such a moisture permeable waterproof film coated article that the moisture permeable waterproof film is less likely to be peeled from the article treated by the water repellent composition.

### DESCRIPTION OF EMBODIMENTS

In this specification, the following terms and their use are, respectively, as follows.

A "compound represented by the formula (m1)" will be referred to as a "compound (m1)". Compounds represented by other formulae will be referred to in the same manner.

A "structural unit represented by the formula (u1)" will be referred to as a "structural unit (u1)". Structural units represented by other formulae will be referred to in the same manner.

A "(meth)acrylate" is a general term for an acrylate and a methacrylate.

A "polyfluoroalkyl group" means a group having some or all of hydrogen atoms in an alkyl group substituted by fluorine atoms.

A "perfluoroalkyl group" means a group having all of hydrogen atoms in an alkyl group substituted by fluorine atoms.

The "mass average molecular weight" of a polymer is a value obtained as calculated as polystyrene by a gel permeation chromatography (GPC) method.

### <Water repellent composition>

The water repellent composition of the present invention comprises the copolymer (A), the polymer (B) and an aqueous medium, and, as the case requires, contains a surfactant and other additives.

### (Copolymer (A))

The copolymer (A) has structural units based on the following monomer (a) and structural units based on the following monomer (b). The copolymer (A) preferably further has one or both of structural units based on the later-described monomer (c) and structural units based on the later described monomer (d). The copolymer (A) may, as the case requires, contain structural units based on the later-described monomer (e). As the copolymer (A), one type may be used alone, or two or more types different in the kinds, proportions, etc. of the structural units, may be used in combination.

### Monomer (a):

The monomer (a) is the following compound (m1).

R^{F}-Q-Z-C(O)C(R)=CH₂ (m1)

Since the copolymer (A) has structural units based on the monomer (a) having a structure of the formula (m1), it is possible to impart water repellency to an article treated by using a water repellent composition containing the copolymer (A).

In the above formula (m1), R^{F} is a C₄₋₆ perfluoroalkyl group. From such a viewpoint that the article treated by using the water repellent composition will be further excellent in water repellency, R^{F} is particularly preferably a C₆ perfluoroalkyl group. R^{F} may be linear or branched, but is preferably linear.

Preferred examples of R^{F} may be F(CF₂)₄-, F(CF₂)₅ -, F(CF₂)₆-, (CF₃)₂CF(CF₂)₂-, etc.

Q is a divalent organic group having no fluorine atom, or a single bond. The divalent organic group is a divalent group containing carbon.

The divalent organic group may be an alkylene group, or a group having, at a terminal of an alkylene group, or between carbon-carbon atoms of an alkylene group, - O-, -NH-, -C(O)-, -SO₂-, -S-, -CD¹=CD²- (where D¹ and D² are each a hydrogen atom or a methyl group), -ϕ-C(O)O- (where ϕ is a phenyl group), etc. The divalent organic group may be linear or may be branched. As the divalent organic group, from the viewpoint of easy availability of the compound (m1), preferred is an alkylene group, and more preferred is -CH₂CH₂-. The alkylene group may be linear or may be branched.

Preferred specific examples of Q include the following groups, etc.

-CH₂-, -CH₂CH₂-, -(CH₂)₃-, -CH₂CH₂CH(CH₃)-, -CH=CH-CH₂-, -S-CH₂CH₂-, - SO₂-CH₂CH₂-, -CH₂CH₂CH₂-S-CH₂CH₂-, -CH₂CH₂CH₂-SO₂-CH₂CH₂-, -ϕ-C(O)O-CH₂CH₂-. As Q, -CH₂CH₂- is particularly preferred.

Z is -O- or NH-. As Z, from the viewpoint of easy availability of the compound (m1), -O- is preferred.

R is a hydrogen atom, a methyl group or a chlorine atom. As R, from such a viewpoint that the article treated by using the water repellent composition will be further excellent in water repellency, a methyl group is preferred.

Preferred specific examples of the compound (m1) include the following ones.
F(CF₂)₆CH₂CH₂OC(O)CH=CH₂,
F(CF₂)₆CH₂CH₂OC(O)C(CH₃)=CH₂,
F(CF₂)₆CH₂CH₂OC(O)C(Cl)=CH₂,
F(CF₂)₄CH₂CH₂OC(O)C(CH₃)=CH₂,
F(CF₂)₄CH₂CH₂OC(O)CH=CH₂,
F(CF₂)₄CH₂CH₂OC(O)C(Cl)=CH₂,
F(CF₂)₆CH₂CH₂OC(O)-ϕ-OC(O)CH=CH₂,
F(CF₂)₄CH₂CH₂OC(O)-ϕ-OC(O)CH=CH₂.

### Monomer (b):

The monomer (b) is a (meth)acrylate having no polyfluoroalkyl group and having a C12-22 alkyl group.

Since the copolymer (A) has structural units derived from the monomer (b), the moisture permeable waterproof film tends to be less likely to be peeled from the article treated by using the water repellent composition containing the copolymer (A).

When the number of carbon atoms in the above alkyl group is at least 12, the moisture permeable waterproof film tends to be less likely to be peeled from the article treated by using the water repellent composition. When the number of carbon atoms in the alkyl group is at most 22, the handling in the polymerization operation will be easy, and it is possible to obtain the copolymer in good yield. The alkyl group may be linear or branched, but is preferably linear, and the number of carbon atoms is preferably from 16 to 22, more preferably from 18 to 22.

As the monomer (b), stearyl (meth)acrylate or behenyl (meth)acrylate is preferred, behenyl (meth)acrylate is more preferred, and behenyl acrylate is further preferred.

### Monomer (c):

The monomer (c) is a halogenated olefin.

By combining structural units based on the monomer (c) and structural units based on the monomer (b), the adhesion of the copolymer (A) and the article will be improved, and thus, the durability (durable water repellency to laundering and heavy rain water repellency) of an article treated by using the water repellent composition will be improved. Further, the moisture permeable waterproof film tends to be more unlikely to be peeled from the article treated by using the water repellent composition.

As the halogenated olefin, a chlorinated olefin or a fluorinated olefin is preferred, and specifically, vinyl chloride, vinylidene chloride, tetrafluoroethylene or vinylidene fluoride may be mentioned. With a view to preventing peeling of the moisture permeable waterproof film, vinyl chloride or vinylidene chloride is more preferred, and vinyl chloride is particularly preferred.

### Monomer (d):

The monomer (d) is a monomer having a crosslinkable functional group (but excluding the same one as the monomer (a)). When the copolymer (A) has structural units derived from the monomer (d), the durability (durable water repellency to laundering and heavy rain water repellency) of an article treaded by using the water repellent composition will be improved. Further, the moisture permeable waterproof film tends to be more unlikely to be peeled from the article treaded by using the water repellent composition.

The crosslinkable functional group is preferably a functional group having at least one bond selected from a covalent bond, an ionic bond and a hydrogen bond, or a functional group capable of forming a crosslinked structure by interaction of such bonds. Such a functional group is preferably an isocyanato group, a blocked isocyanato group, an alkoxysilyl group, an amino group, an alkoxymethyl amide group, a hydroxymethyl amide group, a silanol group, an ammonium salt group, an amide group, an epoxy group, a hydroxy group, an oxazoline group, a carboxy group, an alkenyl group, a sulfo group, etc. In particular, an epoxy group, a hydroxy group, a blocked isocyanato group, an alkoxysilyl group, an amino group, an alkoxymethyl amide group, a hydroxymethyl amide group or a carboxy group is preferred.

As the monomer (d), a (meth)acrylate, an acrylamide, a vinyl ether, or a vinyl ester is preferred.

As specific examples of the monomer (d), the following compounds may be mentioned.

2-isocyanatoethyl (meth)acrylate, 3-isocyanatopropyl (meth)acrylate, 4-isocyanatobutyl (meth)acrylate, and monomers having the isocyanate groups of these monomers converted to blocked isocyanato groups. The blocking agent for the blocked isocyanato groups, may be 2-butanone oxime, pyrazole, 3,5-dimethylpyrazole, 3-methylpyrazole, or ε-caprolactam.

Methoxymethyl (meth)acrylamide, ethoxymethyl (meth)acrylamide, butoxymethyl (meth)acrylamide, diacetone (meth)acrylamide, γ-methacryloyloxypropyl trimethoxysilane, trimethoxyvinylsilane, vinyl trimethoxysilane, dimethylaminoethyl (meth)acrylate, diethylaminoethyl (meth)acrylate, dimethylaminopropyl (meth)acrylate, (meth)acryloyl morpholine, (meth)acryloyloxyethyl trimethyl ammonium chloride, (meth)acryloyloxypropyl trimethyl ammonium chloride, (meth)acrylamide ethyl trimethyl ammonium chloride, (meth)acrylamidepropyl trimethyl ammonium chloride.

tert-butyl (meth)acrylamide sulfonic acid, (meth)acrylamide, N-methyl (meth)acrylamide, N-methylol (meth)acrylamide, N-butoxymethyl (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate, (meth)acrylic acid, 2-(meth)acryloyloxyethyl succinic acid, 2-(meth)acryloyloxy hexahydrophthalic acid, 2-(meth)acryloyloxyethyl acid phosphate, allyl (meth)acrylate, 2-vinyl-2-oxazoline, a polycaprolactone ester of 2-vinyl-4-methyl-(2-vinyl oxazoline) hydroxyethyl (meth)acrylate.

Tri(meth)allyl isocyanurate (T (M) AIC, manufactured by Nihon Kasei CO., LTD), triallyl cyanurate (TAC, manufactured by Nihon Kasei CO., LTD), phenyl glycidyl ether acrylate toluene diisocyanate urethane prepolymer (AT-600, manufactured by Kyoeisha Chemical Co., Ltd.), phenyl glycidyl ether acrylate hexamethylene diisocyanate urethane prepolymer (AH-600, manufactured by Kyoeisha Chemical Co., Ltd.), 3-(methyl ethyl ketoxime) isocyanatomethyl-3,5,5-trimethylcyclohexyl (2-hydroxyethyl methacrylate) cyanate (Tech coat HE-6P, manufactured by Kyoken Kasei), a polyfluoro vinyl ether having a hydroxy group (CF₂=CFOCF₂CF₂CF₂CH₂OH, etc.).

As the monomer (d), preferred is N-methylol (meth)acrylamide, N-butoxymethyl (meth)acrylamide, 2-hydroxyethyl (meth)acrylate, 4-hydroxybutyl (meth)acrylate, a 3,5-dimethylpyrazole adduct of 2-isocyanatoethyl (meth)acrylate, a 3,5-dimethylpyrazole adduct of 3-isocyanatopropyl (meth)acrylate, diacetone acrylamide, glycidyl methacrylate, a polycaprolactone ester of hydroxyethyl (meth)acrylate, a polycaprolactone ester of hydroxyethyl (meth)acrylate, AT-600 or Tech coat HE-6P. As the monomer (d), particularly preferred is N-methylol (meth)acrylamide, 2-hydroxyethyl (meth)acrylate, 4-hydroxybutyl (meth)acrylate, a 3,5-dimethylpyrazole adduct of 2-isocyanatoethyl (meth)acrylate, or a 3,5-dimethylpyrazole adduct of 3-isocyanatopropyl (meth)acrylate.

### Monomer (e):

The monomer (e) is a monomer excluding the same ones as the monomer (a), the monomer (b), the monomer (c) and the monomer (d).

As specific examples of the monomer (e), the following compounds may be mentioned.

Methyl acrylate, ethyl acrylate, propyl acrylate, butyl methacrylate, cyclohexyl acrylate, 2-ethylhexyl (meth)acrylate, butyl methacrylate, n-hexyl (meth)acrylate, isobornyl acrylate, isobornyl methacrylate, benzyl methacrylate, cyclohexyl methacrylate, dicyclopentanyl methacrylate, dicyclopentanyl acrylate, dicyclopentenyl acrylate, vinyl acetate, vinyl propionate, butene, isoprene, butadiene, ethylene, propylene, vinyl ethylene, pentene, ethyl-2-propylene, butyl ethylene, cyclohexyl propyl ethylene, decyl ethylene, dodecyl ethylene, hexene, isohexyl ethylene, neopentyl ethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methyl styrene, p-methyl styrene, hexyl styrene, octyl styrene, nonyl styrene.

N,N-dimethyl (meth)acrylamide, a vinyl alkyl ether, a halogenated alkyl vinyl ether, a vinyl alkyl ketone, butyl acrylate, propyl methacrylate, benzyl acrylate, octyl (meth)acrylate, decyl methacrylate, cyclododecyl acrylate, 3-ethoxypropyl acrylate, methoxy-butyl acrylate, 2-ethylbutyl acrylate, 1,3-dimethylbutyl acrylate, 2-methylpentyl acrylate, aziridinylethyl (meth)acrylate, 2-ethylhexylpolyoxyalkylene (meth)acrylate, polyoxyalkylene di(meth)acrylate.

A crotonic acid alkyl ester, a maleic acid alkyl ester, a fumaric acid alkyl ester, a citraconic acid alkyl ester, a mesaconic acid alkyl ester, triallyl cyanurate, allyl acetate, N-vinyl carbazole, maleimide, N-methyl maleimide, a (meth)acrylate having silicone in its side chain, a (meth)acrylate having an urethane bond, a (meth)acrylate having a polyoxyalkylene chain with a terminal C₁₋₄ alkyl group, an alkylene di(meth)acrylate, etc.

The copolymer (A) in the present invention does not have a structural unit based on a monomer having a perfluoroalkyl group with 7 or more carbon atoms, and therefore, when decomposed, bioaccumulation of its degradation products is low, and thus, the environmental load is low.

From the viewpoint of compatibility with the polymer (B), it is preferred that the copolymer (A) does not have structural units based on a monomer having a carboxy group.

### Proportions of the respective structural units:

The proportion of structural units based on the monomer (a) in the copolymer (A) is preferably from 5 to 95 mass%, more preferably from 10 to 90 mass% in all structural units (100 mass%) based on monomers constituting the copolymer (A). When the proportion is at least the lower limit value in the above range, the article treated by using the water repellent composition will be further excellent in water repellency. When the proportion is at most the upper limit value in the above range, the moisture permeable waterproof film tends to be more unlikely to be peeled from the article treated by using the water repellent composition.

Further, the proportion of structural units based on the monomer (b) in the copolymer in (A) is preferably from 5 to 95 mass%, more preferably from 10 to 90 mass%, in all structural units (100 mass%) based on monomers constituting the copolymer (A). When the proportion is at least the lower limit value in the above range, the moisture permeable waterproof film tends to be further unlikely to be peeled from the article treated by using the water repellent composition. When the proportion is at most the upper limit value in the above range, it does not impair the effect of other structural units.

The proportion of structural units derived from monomer (c) is preferably from 0 to 40 mass%, more preferably from 0 to 30 mass%, in all structural units (100 mass%) based on monomers constituting the copolymer (A). When the proportion is at most the upper limit value in the above range, it does not impair the effect of other structural units.

The proportion of structural units based on the monomer (d) is preferably from 0 to 20 mass%, more preferably from 0 to 10 mass%, in all structural units (100 mass%) based on monomers constituting the copolymer (A). When the proportion is at most the upper limit value in the above range, it does not impair the effect of other structural units.

The proportion of structural units based on the monomer (e) is, with a view to not impairing the effect of other structural units, preferably from 0 to 35 mass%, more preferably from 0 to 20 mass%, in all structural units (100 mass%) based on monomers constituting the copolymer (A).

In a case where the copolymer (A) has structural units based on the monomer (a), structural units based on the monomer (b), structural units based on the monomer (c) and structural units based on the monomer (d), the proportions of the respective structural units are preferably as follows.

The proportion of structural units derived from the monomer (a) is preferably from 15 to 75 mass%, more preferably from 20 to 70 mass%, in all structural units (100 mass%) based on monomers constituting the copolymer (A). When the proportion is at least the lower limit value in the above range, the article treated by using the water repellent composition will be further excellent in water repellency. When the proportion is at most the upper limit value in the above range, the moisture permeable waterproof film tends to be further unlikely to be peeled from the article treated by using the water repellent composition.

The proportion of structural units derived from the monomer (b) is preferably from 15 to 80 mass%, more preferably from 20 to 75 mass%, in all the structural units (100 mass%) based on monomers constituting the copolymer (A). When the proportion is at least the lower limit value in the above range, the moisture permeable waterproof film tends to be further unlikely to be peeled from the article treated by using the water repellent composition. When the proportion is at most the upper limit value in the above range, it does not impair the effect of other structural units.

The proportion of structural units derived from the monomer (c) is preferably from 1 to 30 mass%, more preferably from 1 to 25 mass%, in all structural units (100 mass%) based on monomers constituting the copolymer (A). When the proportion is at least the lower limit value in the above range, the moisture permeable waterproof film tends to be further unlikely to be peeled from the article treated by using the water repellent composition. When the proportion is at most the upper limit value in the above range, it does not impair the effect of other structural units.

The proportion of structural units based on the monomer (d) is preferably from 0.1 to 10 mass%, more preferably from 0.1 to 5 mass%, in all structural units (100 mass%) based on monomers constituting the copolymer (A). When the proportion is at least the lower limit value in the above range, the moisture permeable waterproof film tends to be further unlikely to be peeled from the article treated by using the water repellent composition. When the proportion is at most the upper limit value in the above range, it does not impair the effect of other structural units.

The proportion of structural units based on the monomer (e) is, from the viewpoint of not impairing the effect of other structural units, preferably from 0 to 35 mass%, more preferably from 0 to 20 mass%, in all structural units (100 mass%) based on monomers constituting the copolymer (A).

The proportion of structural units based on a monomer in the present invention is calculated based on the charged amount of the monomer at the time of production of the copolymer (A).

The mass average molecular weight of the copolymer (A) is preferably from 1,000 to 500,000, more preferably from 3,000 to 200,000, further preferably from 10,000 to 150,000. When the mass average molecular weight is within the above range, the balance between the water repellency and the prevention of peeling of the moisture permeable waterproof film, of the article treated by using the water repellent composition will be good.

### (Polymer (B))

The polymer (B) is a polymer having, as a pendant group, an amino group (-NR¹R²), an ammonium salt group (-N⁺R¹R²R³X⁻) or an amide group (-C(O)NR₄-) (but excluding the same one as the copolymer (A)). Here, R¹, R², R³ and R⁴ are each independently a hydrogen atom or a monovalent hydrocarbon group, and X⁻ is an anion as a counter ion to -N⁺R¹R²R³.

In the polymer (B), the structural units based on a monomer having at least one type of group selected from the group consisting of an amino group, an ammonium salt group and an amide group are at least one type of structural units selected from the group consisting of the following structural units (u1) to (u17) as defined below.

As R¹, R², R³ and R⁴, from such a viewpoint that the moisture permeable waterproof film tends to be further unlikely to be peeled from the article treated by using the water repellent composition, preferred is a hydrogen atom or a C₁₋₃ alkyl group, and from the viewpoint of the balance between the water repellency and the prevention of peeling of the moisture permeable waterproof film, of the article treated by using the water repellent composition, more preferred is a hydrogen atom.

X⁻ may be a halogen ion (chlorine ion), an acetate ion, a formate ion, a malate ion, a sulfate ion, etc. From the viewpoint of easy availability of the polymer (B), a chloride ion or an acetate ion is preferred, and a chlorine ion is more preferred.

As the polymer (B), from such a viewpoint that the moisture permeable waterproof film tends to be further unlikely to be peeled from the article treated by using the water repellent composition, preferred is one having structural units based on a monomer having an amino group or an ammonium salt group, and more preferred is one having structural units based on a monomer having an ammonium salt group. As the polymer (B), from the viewpoint of the balance between the water repellency and the prevention of peeling of the moisture permeable waterproof film, of the treated article, preferred is one having structural units based on a monomer having -NH₂ or NH₃⁺·X⁻, and more preferred is one having structural units based on a monomer having -NH₃⁺·X⁻.

As the polymer (B), from such a viewpoint that the effect of the polymer (B) will be sufficiently exhibited, preferred is one composed solely of structural units based on a monomer having at least one type of group selected from the group consisting of an amino group, an ammonium salt group and an amide group.

The structural units based on a monomer having at least one type of group selected from the group consisting of an amino group, an ammonium salt group and an amide group are at least one type of structural units selected from the group consisting of structural units (u1) to (u17). Among them, from such a viewpoint that the moisture permeable waterproof film tends to be unlikely to be peeled from the treated article, at least one type of structural units selected from the group consisting of structural units (u1) to (u17) is used, and from the viewpoint of the balance between the water repellency and the prevention of peeling of the moisture permeable waterproof film, of the treated article, more preferred is at least one type of structural units selected from the group consisting of structural units (u1) to (u8). Units (u18) to (u25) are illustrated for comparative purposes.

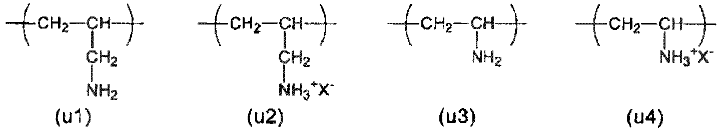

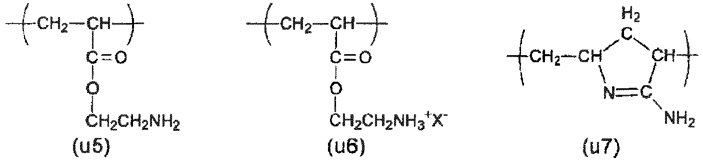

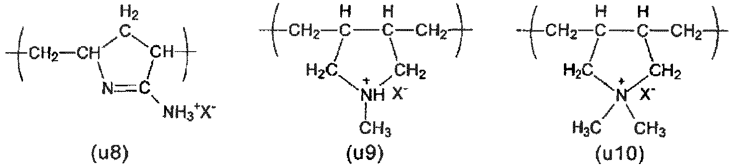

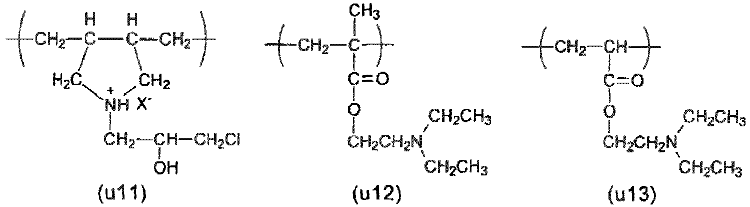

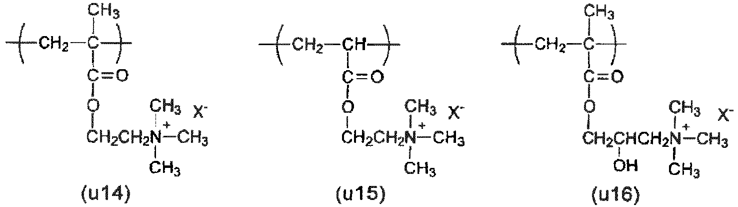

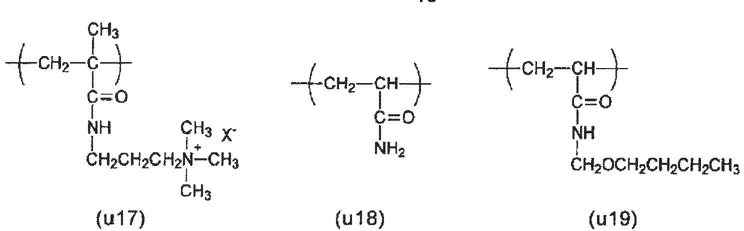

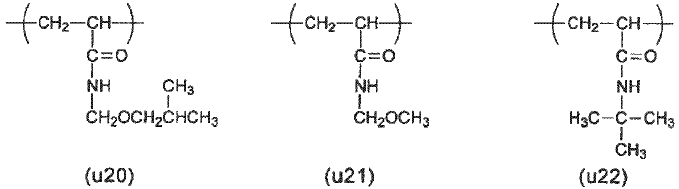

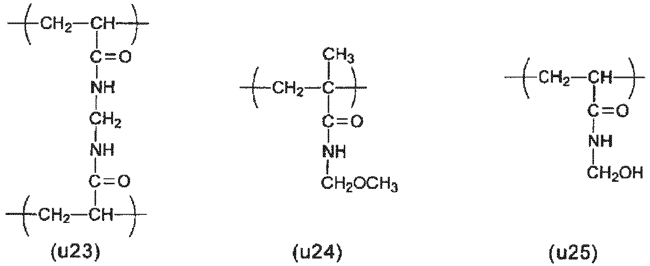

Commercial products of the polymer having structural units (u1) may be PAA series; commercial products of the polymer having structural units (u2) may be PAA-HCL series; commercial products of the polymer having structural units (u9) may be PAS-M series; commercial products of the polymer having structural units (u10) may be PAS-H series; and the commercial products of the polymer having structural units (u10) and structural units (u11) may be PAS-880. The above commercial products are all trade names of Nittobo Medical Co., Ltd. As the polymer (B), one type may be used alone, or two or more types may be used in combination.

The mass average molecular weight of the polymer (B) is preferably from 1,000 to 200,000, more preferably from 1,000 to 100,000. When the mass average molecular weight of the polymer (B) is within the above range, the moisture permeable waterproof film tends to be further unlikely to be peeled from the article treated by using the water repellent composition.

### (Aqueous medium)

The aqueous medium may be water alone, or a mixed medium of water and another medium.

Another medium is preferably a water-soluble medium. Specific examples of another medium may be an alcohol, a glycol, a glycol ether, a ketone, an ester, an ether, a nitrogen-containing compound (an amide, N-methylpyrrolidone, pyridine, etc.), a sulfur-containing compound (dimethyl sulfoxide, sulfolane, etc.), an organic acid (carboxylic acid, etc.), etc.

When the aqueous medium contains such another medium, the content of another medium is preferably from 1 to 80 parts by mass, more preferably from 10 to 60 parts by mass, to 100 parts by mass of water.

### (Surfactant)

The surfactant may be a hydrocarbon type surfactant or a fluorinated surfactant, which may, respectively, be an anionic surfactant, a nonionic surfactant, a cationic surfactant, or an amphoteric surfactant.

The water repellent composition of the present invention preferably contains a cationic surfactant and no anionic surfactant, from the viewpoint of compatibility with the polymer (B).

The water repellent composition of the present invention preferably contains a nonionic surfactant and a cationic surfactant, from the viewpoint of the stability of the copolymer (A). The ratio of the nonionic surfactant to the cationic surfactant (nonionic surfactant/cationic surfactant) is preferably from 97/3 to 40/60 (mass ratio).

The nonionic surfactant is preferably at least one member selected from the group consisting of surfactants s¹ to s⁶ disclosed in WO2010/047258 and WO2010/123042, and amidoamine surfactants disclosed in Japanese Patent No. 5569614.

The cationic surfactant is preferably surfactant s⁷ disclosed in WO2010/047258, and WO2010/123042.

The amphoteric surfactant is preferably surfactant s⁸ disclosed in WO2010/047258 and WO2010/123042.

Further, as the surfactant, it is possible to use surfactant s⁹ (polymer surfactant) disclosed in WO2010/047258 and WO2010/123042.

Preferred embodiments of the surfactant are similar to the preferred embodiments disclosed in WO2010/047258 and WO2010/123042.

As more preferred specific examples of the nonionic surfactant, the following compounds may be mentioned.
C₁₈H₃₇O[CH₂CH(CH₃)O]₂-(CH₂CH₂O)₃₀H,
C₁₈H₃₅O-(CH₂CH₂O)₂₆H, C₁₈H₃₅O-(CH₂CH₂ O)₃₀H,
C₁₆H₃₃O[CH₂CH(CH₃)O]₅-(CH₂ CH₂O)₂₀H,
C₁₂H₂₅O[CH₂CH(CH₃)O]₂-(CH₂ CH₂O)₁₅H,
(C₈H₁₇)(C₆H₁₃)CHO-(CH₂CH₂O)₁₅H,
C₁₀H₂₁O[CH₂CH(CH₃)O]₂-(CH₂ CH₂O)₁₅H,
C₆F₁₃CH₂CH₂O-(CH₂CH₂O)₁₅H,
C₆F₁₃CH₂CH₂O[CH₂CH(CH₃)O]₂-(CH₂ CH₂ O)₁₅H,
C₄F₉CH₂CH₂O[CH₂CH(CH₃)O]₂-(CH₂ CH₂ O)₁₅H.
HO-(CH₂ CH₂ O)₁₅-(C₃H₆O)₃₅-(CH₂ CH₂ O)₁₅H,
HO-(CH₂CH₂O)₈-(C₃H₆O)₃₅-(CH₂CH₂O)₈H,
HO-(CH₂CH₂O)₉-(C₃H₆O)₂₀-(CH₂CH₂O)₉H,
HO-(CH₂CH₂O)₄₅-(C₃H₆O)₁₇-(CH₂CH₂O)₄₅H,
HO-(CH₂CH₂O)₃₄-(CH₂CH₂CH₂CH₂O)₂₈-(CH₂CH₂O)₃₄H.

As more preferred specific examples of the cationic surfactant, the following compounds may be mentioned.

Stearyl trimethyl ammonium chloride, stearyl dimethyl monoethyl ammonium ethyl sulfate, stearyl monomethyl di(polyethylene glycol) ammonium chloride, fluorohexyl trimethyl ammonium chloride, di(tallow alkyl) dimethyl ammonium chloride, dimethyl mono coconut amine acetate, amidoamine quaternary ammonium salts disclosed in Japanese Patent No. 5569614, etc.

As more preferred specific examples of the amphoteric surfactant, the following compounds may be mentioned.

Dodecyl betaine, stearyl betaine, dodecyl carboxymethyl hydroxyethyl imidazolinium betaine, dodecyl dimethylamino acetic acid betaine, fatty acid amide propyl dimethylamino acetic acid betaine.

### (Other Additives)

Other additives may, for example, be a penetrating agent, a defoamer, a water absorbent, an antistatic agent, an anticreasing agent, a texture modifier, a film forming assistant agent (excluding the above-mentioned other media), a water-soluble polymer (polyvinyl alcohol, etc.), a thermosetting agent (a melamine resin, a urethane resin, etc.), an epoxy curing agent, a thermosetting catalyst, a crosslinking catalyst, a synthetic resin, a fiber stabilizing agent, etc.

### (Proportions of the respective components)

The mass ratio ((A)/(B)) of the copolymer (A) to the polymer (B) is preferably from 100/0.01 to 100/10, more preferably from 100/0.05 to 100/5, further preferably from 100/0.1 to 100/1. When the copolymer (A) is at least the lower limit value in the above range (i.e. when the polymer (B) is at most the upper limit value in the above range), the article treated by using the water repellent composition will be further excellent in water repellency. When the copolymer (A) is at most the upper limit value in the above range (i.e. when the polymer (B) is at least the lower limit value in the above range), the moisture permeable waterproof film tends to be further unlikely to be peeled from the article treated by using the water repellent composition.

The total amount of surfactants is preferably from 1 to 10 parts by mass, more preferably from 2 to 8 parts by mass, to 100 parts by mass of the total of the copolymer (A) and the polymer (B).

The solid content concentration of the water repellent composition of the present invention is preferably from 10 to 40 mass%, more preferably from 15 to 35 mass%, in the water repellent composition (100 mass%).

The solid content concentration of the treatment liquid of water repellent composition of the present invention is preferably from 0.1 to 8 mass%, more preferably from 0.2 to 5 mass%, in the water repellent composition (100 mass%).

Here, the solid content concentration of the water repellent composition is the proportion of the nonvolatile content in the water repellent composition. The nonvolatile content may, for example, be the copolymer (A), the polymer (B), surfactants, etc. The solid content concentration is calculated from the mass when the water repellent composition has been heated in a convection dryer at 120°C for four hours and the mass before the heating.

### (Process for producing water repellent composition)

The water repellent composition of the present invention may be produced, for example, by the following method (α) or method (β).

### (Method (α))

The method (α) is preferably a process having the following step (i) and step (ii).

Step (i): a step of polymerizing, in an aqueous medium in the presence of a surfactant and a polymerization initiator, a monomer (a) and a monomer (b), and, as the case requires, at least one member selected from the group consisting of a monomer (c), a monomer (d) and a monomer (e), to obtain an emulsion containing a copolymer (A). As the case requires, the solid content concentration of the emulsion containing the copolymer (A) may be adjusted.

Step (ii): a step of mixing the emulsion containing the copolymer (A), and a polymer (B), to prepare a water repellent composition.

In this case, a treatment liquid of water repellent composition is preferably prepared by mixing the water repellent composition obtained in (ii), with water, other media, other additives, etc.

The polymerization method may be a dispersion polymerization method, an emulsion polymerization method, a suspension polymerization method, etc., and an emulsion polymerization method is preferred. From the viewpoint of improvement in the yield of the copolymer (A), it is preferred to pre-emulsify a mixture comprising monomer components, a surfactant and an aqueous medium before the emulsion polymerization. For example, a mixture comprising monomer components, a surfactant and an aqueous medium is mixed and dispersed by a homomixer or a high pressure emulsifier.

The polymerization initiator may be a thermal polymerization initiator, a photopolymerization initiator, a radiation initiator, a radical polymerization initiator, an ionic polymerization initiator, etc., and a radical polymerization initiator is preferred.

As the radical polymerization initiator, a common initiator such as an azo type compound, a peroxide, or a redox initiator may be used depending on the polymerization temperature. As the radical polymerization initiator, an azo type initiator is preferred, and a water-soluble azo initiator is more preferred. Specific examples of the water-soluble azo initiator include 2,2'-azobis(4-methoxy-2,4-dimethylvaleronitrile), 2,2'-azobis(2,4-dimethylvaleronitrile), dimethyl 2,2'-azobis(2-methyl propionate), 2,2'-azobis(2-methylbutyronitrile), 2,2'-azobis(2-methylpropionamide) dihydrochloride, 2,2'-azobis[2-(2-imidazolin-2-yl) propane] disulfate, 2,2'-azobis[2-(2-imidazolin-2-yl) propane] dihydrochloride, 2,2'-azobis [2-(2-imidazolin-2-yl) propane] acetate, 2,2'-azobis [N-(2-carboxyethyl) 2-methylpropionamidine] hydrate, 2,2'-azobis(1-imino-1-pyrrolidino-2-methyl propane) dihydrochloride, etc. The 10-hour half-life temperature of the polymerization initiator is preferably from 20 to 150°C, more preferably from 20 to 100°C.

At the time of the polymerization of the monomers, a molecular weight modifier may be used. As the molecular weight modifier, an aromatic compound, a mercapto alcohol or a mercaptan is preferred, and an alkyl mercaptan is particularly preferred. The molecular weight modifier may be mercaptoethanol, n-octyl mercaptan, n-dodecyl mercaptan, tert-dodecyl mercaptan, stearyl mercaptan, α-methylstyrene dimer (CH₂=C(Ph)CH₂C(CH₃)₂Ph, where Ph is a phenyl group), etc.

### (Method (β))

The method (β) is preferably a process having the following step (iii).

Step (iii): a step of polymerizing monomer components comprising a monomer (a) and a monomer (b), and as the case requires at least one member selected from the group consisting of a monomer (c), a monomer (d) and a monomer (e) in an aqueous medium in the presence of a polymer (B), a surfactant and a polymerization initiator, to obtain an emulsion containing a copolymer (A). As the case requires, the solid content concentration of the emulsion containing the copolymer (A) may be adjusted.

In this case, a treatment liquid of water repellent composition is preferably prepared by mixing the water repellent composition obtained in steps (iii) with water, other media, other additives, etc.

As the polymerization method, the above-mentioned method may be used, and an emulsion polymerization method is preferred. As the polymerization initiator and the molecular weight modifier, ones described above may be used.

Since no substantial residual monomers are detectable after polymerization, the proportions of monomer (a) to (e) are the same as the proportions of the respective structural units based on the monomers (a) to (e).

In the water repellent composition of the present invention, it is preferred that the copolymer (A) is dispersed as particles in an aqueous medium. The average particle size of the copolymer (A) is preferably from 10 to 1,000 nm, more preferably from 10 to 300 nm, particularly preferably from 10 to 200 nm. When the average particle size is within such a range, it is not necessary to use a surfactant or the like in a large amount, the water repellency is good, and the dispersed particles can be stably present in the aqueous medium without precipitation. The average particle size of the copolymer (A) can be measured by a dynamic light scattering apparatus, an electron microscope, etc.

The above-described water repellent composition of the present invention contains the copolymer (A) having structural units based on the monomer (a), and thus, by treating an article with the water repellent composition, it is possible to obtain the article excellent in water repellency.

Further, it contains the copolymer (A) having structural units based on the monomer (a) and structural units based on the monomer (b), and the polymer (B) having an amino group, an ammonium salt group or an amide group as a pendant group, and thus, it is possible to obtain a moisture permeable waterproof film coated article, wherein the moisture permeable waterproof film is less likely to be peeled from the article treated by the water repellent composition. In particular, the copolymer (A) has structural units based on a monomer (b) which is a (meth)acrylate having no polyfluoroalkyl group and having an alkyl group having a specific number of carbon atoms, whereby the effect of letting the moisture permeable waterproof film be less likely to be peeled from the article treated with the water repellent composition is remarkable.

An article treated with a water repellent composition comprising a fluorinated polymer (hereinafter referred to as copolymer (C)) other than the copolymer (A), and a polymer (B), or a water repellent composition containing the copolymer (A) and not containing the polymer (B), was not one to meet the recent strict requirement for preventing peeling of the moisture permeable waterproof film. On the other hand, by the combined use of the copolymer (A) and the polymer (B), such an unexpected effect has been obtained that a moisture permeable waterproof film coated article is obtainable which sufficiently satisfy the recent strict requirement.

Further, in the water repellent composition of the present invention, since the copolymer (A) has no structural units based on a monomer having a perfluoroalkyl group having 7 or more carbon atoms, the content of perfluorooctanoic acid (PFOA) or perfluorooctane sulfonic acid (PFOS), or precursors or analogues thereof, of which environmental impact has been pointed out, is below the detection limit. Here, the content is referenced to a solid content concentration of 20%, and is detected as an analysis value of LC-MS / MS as described in WO2009/081822.

### <Process for producing moisture permeable waterproof film coated article>

The process for producing a moisture permeable waterproof film coated article of the present invention is a process of treating an article by the water repellent composition to form a moisture permeable waterproof film on the surface of the article treated by the water repellent composition.

### (Treatment by water repellent composition)

The article to be treated by the water repellent composition of the present invention may be fibers (natural fibers, synthetic fibers, blended fibers, etc.), various fiber products, nonwoven fabrics, resins, paper, leather, wood, metal, stone, concrete, plaster, glass, etc. As the article to be treated by the water repellent composition, since a moisture permeable waterproof film is to be provided, a fiber product such as a sportswear is preferred.

The treating method by the water-repellent composition may, for example, be a method of applying or impregnating the water repellent composition to an article by a known coating method, followed by drying.

### (Formation of moisture permeable waterproof film)

The moisture permeable waterproof film may be a microporous polyurethane resin film or the like. The moisture permeable waterproof film may, for example, be formed by applying a coating liquid to one surface of the article treated by the water repellent composition, then being left to stand for the predetermined time, then being immersed in water for a predetermined time to remove the solvent, followed by drying. As the coating method, various coating methods may be used such as knife coating, knife over roll coating, reverse roll coating, etc.

The coating liquid is one containing the material for a moisture permeable waterproof film, a solvent, etc.

As the material for a moisture permeable waterproof film, it is possible to employ a conventional known polyurethane resin obtainable by reacting a polyisocyanate component and a polyol component. As the polyisocyanate component, an aromatic diisocyanate, an aliphatic diisocyanate, an alicyclic diisocyanate, etc. may be used alone or in combination. Specifically, tolylene-2,4-diisocyanate, 4,4'-diphenylmethane diisocyanate, 1,6-hexane diisocyanate, 1,4-cyclohexane diisocyanate, etc. may be used as the main component, and as the case requires, a trifunctional or higher functional polyisocyanate may be used. As the polyol component, a polyether polyol, a polyester polyol, etc. may be used. As the polyether polyol, polyethylene glycol, polypropylene glycol, polytetramethylene glycol or the like may be used. As the polyester polyol, a reaction product of a diol such as ethylene glycol or propylene glycol, and a dibasic acid such as adipic acid, sebacic acid, etc., or a ring-opening polymerization product such as caprolactone, etc., and of course, a polymer of an oxy acid monomer or its prepolymer may also be used.

As the solvent, a polar organic solvent is preferably used, and, for example, N,N-dimethylformamide, N,N-dimethylacetamide, dimethyl sulfoxide, N-methylpyrrolidone, hexamethylene phosphonic amide, etc. may be mentioned. In the polyurethane resin solution, an aid such as a fluorinated water repellant agent or a crosslinking agent may be added.

### EXAMPLES

In the following, the present invention will be described in detail with reference to Examples, but the present invention is not limited thereto.

Ex. 1-1 to 1-11, 2-2 to 2-5, 2-7 to 2-10, 3-1 to 3-3 are Examples of the present invention, and Ex. 2-1, 2-6, 4-1 to 4-3 are Comparative Examples.

### <Evaluation methods>

### (Water repellency)

With respect to a test cloth, the water repellency was evaluated in accordance with the spray test in JIS L1092-2009. The water repellency was represented by five stage grades of 1 to 5. The larger the score, the better the water repellency. One with a grade of at least 3 is deemed to be one having water repellency developed. Grades having + (-) attached thereto indicate that the respective properties are slightly better (worse) as compared to the standard properties of the grades. Further, as a grade, for example, "3-4" indicates that it is intermediate between grades 3 and 4.

### (Peel strength)

A heat sealing tape was overlaid on a moisture permeable waterproof film as a test cloth and partially press-bonded by hot pressing (garment press, temperature: 150°C, pressure: 24.5 N, time: 30 seconds), followed by aging overnight (about 15 hours). So that the non-press-bonded portion would remain at one end, the tape-attached test cloth was cut into 8 cm x 2.5 cm to obtain a test specimen. A tensilon universal testing machine (manufactured by Shimadzu Corp., AGS-X) was prepared, and by one gripping of the testing machine, only the heat sealing tape at an end on the non-press-bonded portion side of the test specimen was pinched, and by the other gripping of the test machine, the end on the press-bonded portion side of the test specimen was pinched. A tensile test was conducted under conditions of tensile speed: 10 cm/min, and distance: 5 cm, to measure the force applied (peel strength) when the heat-sealing tape was peeled off. Measurements were conducted three times in total, to obtain an average value of peel strength. The larger the peel strength, the less likely the peeling of the moisture permeable waterproof film formed by the coating liquid.

### (Solid content concentration)

1 g of a water repellent composition was precisely weighed and taken up in an aluminum cup. This was put in a convection dryer and dried at 120°C for 4 hours. Thereafter, the aluminum cup was taken out of the convection dryer and accurately weighed. The solid content concentration was calculated by (the mass of the water repellent composition after drying)/(the mass of the water repellent composition sampled) and represented by a percentage.

### <Abbreviations>

Monomer (a): C6FMA: F(CF₂)₆CH₂CH₂OC(O)C(CH₃)=CH₂
Monomer (b): BeA: behenyl acrylate, STA: stearyl acrylate
Monomer (c): VCI: vinyl chloride.
Monomer (d): N-MAM: N-methylolacrylamide.
Monomer (e): CmFA: F(CF₂)ₘCH₂CH₂OC(O)CH=CH₂ (a mixture wherein m is from 6 to16, m being 8 or more is at least 99 mass%, and the average value of m is 9). DOM: dioctyl maleate.

### (Surfactants)

E350: polyoxyethylene stearyl ether (Emulgen (Kao Corporation product name) 350, ethylene oxide about 50 mol adduct),
E420: polyoxyethylene oleyl ether (Emulgen (Kao Corporation product name) 420, ethylene oxide about 13 mol adduct),
E430: polyoxyethylene oleyl ether (Emulgen (Kao Corporation product name) 430, ethylene oxide about 30 mol adduct),
Lipoquad 18: stearyl trimethyl ammonium chloride (Lion Corporation trade name, Lipoquad 18-63),
P204: ethylene oxide propylene oxide polymer (NOF Corporation trade name, Plonon 204, the proportion of ethylene oxide is 40 mass%),
SFY485: 2,4,7,9-tetramethyl-5-decyne-4,7-diol ethylene oxide adduct (Nissin Chemical Industry Co., Ltd. trade name, Surfynol 485, ethylene oxide addition molar number 30).

### (Molecular weight modifiers)

StSH: stearyl mercaptan, DoSH: n-dodecyl mercaptan.

### (Polymerization initiators)

VA061A: an acetate of 2,2'-azobis[2-(2-imidazolin-2-yl)propane] (Wako Pure Chemical Industries, Ltd., trade name, VA-061).
VA061: 2,2'-azobis[2-(2-imidazolin-2-yl)propane] (Wako Pure Chemical Industries, Ltd., trade name, VA-061).

### (Others)

AcOH: acetic acid, water: deionized water, DPG: dipropylene glycol.

### <Polymers (B)>

Polymer (B-1): allylamine hydrochloride polymer (Nittobo Medical Co., Ltd. trade name, PAA-HCL-01, mass average molecular weight: 1,600),
Polymer (B-2): allylamine hydrochloride polymer (Nittobo Medical Co., Ltd. trade name, PAA-HCL-3L, mass average molecular weight: 15,000),
Polymer (B-3): allylamine hydrochloride polymer (Nittobo Medical Co., Ltd. trade name, PAA-HCL-10L, mass average molecular weight: 150,000),
Polymer (B-4): methyl diallylamine hydrochloride polymer (Nittobo Medical Co., Ltd. trade name, PAS-M-1, mass average molecular weight: 20,000),
Polymer (B-5): diallyl dimethyl ammonium chloride polymer (Nittobo Medical Co., Ltd. trade name, PAS-H-5L, mass average molecular weight: 30,000).

### <Production of copolymers (A) and other fluorinated copolymer>

### (Copolymer (A-1))

In a glass beaker, 30 parts by mass of C6FMA, 50 parts by mass of BeA, 1 part by mass of N-MAM, 2 parts by mass of E350, 2 parts by mass of E420, 1 part by mass of Lipoquad 18, 0.5 part by mass of StSH, 156.67 parts by mass of water and 30 parts by mass of DPG were put, heated at 60°C for 30 minutes and then mixed by means of a homomixer (manufactured by Nihonseiki Kaisha Ltd., BIO mixer) to obtain a mixed liquid.

The above mixed liquid was, while being maintained at 60°C, treated by a high pressure emulsifier (manufactured by APV Rannie, Minilab) at 40 MPa to obtain an emulsion. This emulsion was put into a stainless steel reactor and cooled to at most 40°C. Thereto, 0.5 part by mass of VA061A was added, and after the gas phase was replaced with nitrogen, 19 parts by mass of VCI was introduced, followed by a polymerization reaction at 60°C for 15 hours with stirring, to obtain an emulsion of the copolymer (A-1). The solid content concentration was 35 mass%. The charged amounts of the respective starting materials are shown in Table 1. The proportion of structural units based on each monomer, and the mass average molecular weight of the copolymer are shown in Table 2.

### (Copolymers (A-2) to (A -7), (copolymer (C)))

Emulsions of copolymers (A-2) to (A-7), (copolymer (C)) were obtained in the same manner as of the copolymer (A-1) except that the charged proportions were changed as shown in Table 1. Here, charging of other than VA061A, VA061, AcOH and VCI was conducted at the time of the preparation of the mixed liquid. The solid content concentration of each emulsion was 35 mass%. The proportion of structural unit based on each monomer, and the mass average molecular weight of the copolymer are shown in Table 2.

**TABLE 1**

| Charged proportions (parts by mass) | Copolymer (A) or copolymer (C) | | | | | | | |
|---|---|---|---|---|---|---|---|---|
| | A-1 | A-2 | A-3 | A-4 | A-5 | A-6 | A-7 | C |
| C6FMA | 30 | 30 | 40 | 30 | 30 | 30 | 30 | - |
| BeA | 50 | 50 | 40 | 50 | 50 | 50 | - | - |
| STA | - | - | - | - | - | - | 50 | - |
| VCI | 19 | 19 | 19 | 19 | 19 | 19 | 19 | 18 |
| N-MAM | 1 | 1 | 1 | 1 | 1 | 1 | 1 | 2.4 |
| CmFA | - | - | - | - | - | - | - | 73.2 |
| DOM | - | - | - | - | - | - | - | 6.4 |
| E350 | 2 | - | - | 2 | 2 | 2 | 2 | 3.4 |
| D420 | 2 | - | - | 2 | 2 | 2 | 2 | - |
| E430 | - | 4 | 4 | - | - | - | - | - |
| Lipoquad 18 | 1 | 1 | 1 | - | - | - | 1 | - |
| P204 | - | - | - | - | - | - | - | 1 |
| SFY485 | - | - | - | - | - | - | - | 0.8 |
| StSH | 0.5 | 0.5 | 0.5 | 0.5 | 0.5 | 0.5 | 0.5 | - |
| DoSH | - | - | - | - | - | - | - | 0.3 |
| VA061 A | 0.5 | 0.5 | 0.5 | 0.5 | 0.5 | 0.5 | 0.5 | - |
| VA061 | - | - | - | - | - | - | - | 0.9 |
| AcOH | - | - | - | - | - | - | - | 0.7 |
| Polymer (B-4) | - | - | - | - | 2 | - | - | - |
| Polymer (B-5) | - | - | - | 1 | - | 2 | - | - |
| Water | 156.67 | 156.67 | 156.67 | 155 | 155 | 155 | 155.67 | 142 |
| DPG | 30 | 30 | 30 | 30 | 30 | 30 | 30 | 39.1 |

**TABLE 2**

| Structural units (mass%) | Copolymer (A) or copolymer (C) | | | | | | |
|---|---|---|---|---|---|---|---|
| | A-1 | A-2 | A-3 | A-4 | A-5 | A-6 | C |
| C6FMA | 30 | 30 | 40 | 30 | 30 | 30 | - |
| BeA | 50 | 50 | 40 | 50 | 50 | 50 | - |
| VCI | 19 | 19 | 19 | 19 | 19 | 19 | 18 |
| N-MAM | 1 | 1 | 1 | 1 | 1 | 1 | 2.4 |
| CmFA | - | - | - | - | - | - | 73.2 |
| DOM | - | - | - | - | - | - | 6.4 |
| Mass average molecular weight | 102,922 | 111,801 | 65,742 | 98,452 | 91,238 | 98,459 | 21,690 |

### <Preparation of water repellent composition, and production of article>

### (Ex. 1-1 to 1-11)

The emulsion of the copolymer (A), and the polymer (B), were mixed so that the mass ratio ((A)/(B)) in the solid content would be as shown in Table 3, to obtain a water repellent composition. The water repellent composition was diluted with water and the solid content concentration of the copolymer (A) was adjusted to be 1.5 mass% to obtain a treatment liquid.

A polyester taffeta, a polyester woolly taffeta or a nylon high density taffeta was immersed in the treatment liquid by a padding method, and then squeezed so that the wet pick-up would be, respectively, 28 mass%, 70 mass% or 50 mass%. This was heated at 170°C for 60 seconds, followed by aging overnight in a room at 25°C under a humidity of 60%, to obtain a test cloth for water repellency test. The water repellency is shown in Table 3.

Further, the above water repellent composition was diluted with water to adjust the solid content concentration of the copolymer (A) to be 1.2 mass%, to obtain a treatment liquid.

A polyester taffeta or a nylon high density taffeta was immersed in the treatment liquid by a padding method, and then squeezed so that the wet pickup would, respectively, be 28 mass% or 50 mass%. This was heated at 170°C for 60 seconds, followed by aging overnight in a room at 25°C under a humidity of 60% to obtain a test cloth for peel strength test.

100 g of an urethane prepolymer (manufactured by Dainichiseika Color & Chemicals Mfg. Co., Ltd., Resamine CU-4700), 1 g of a cross-linking agent (manufactured by Nippon Polyurethane Industry Co., Ltd., Coronate HL), 2 g of a coloring agent (manufactured by Dainichiseika Color & Chemicals Mfg. Co., Ltd., Seika Seven ALT #8000) and 30 g of N,N-dimethylformamide were mixed and left to stand still overnight (about 15 hours), to obtain a coating liquid.

Using an applicator (RK Print Coat Instruments Ltd.), the coating liquid was applied to the surface of the test cloth for peel strength test under conditions of coating speed: 0.1 m/sec, coating liquid temperature: 35°C, so that the thickness after drying would be 40 µm. The test cloth after coating was left to stand still for 30 seconds, then immersed in water at 20°C for 2 minutes, and then immersed in water at 40°C for 2 minutes. Then, it was dried at 150°C for 90 seconds, followed by aging overnight (about 15 hours) to obtain a moisture permeable waterproof film coated test cloth. The peel strength is shown in Table 3.

**TABLE 3**

| | | Ex. | | | | | | | | | | |
|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 |
| Copolymer (A) | | A-1 | A-1 | A-1 | A-1 | A-1 | A-1 | A-1 | A-1 | A-1 | A-1 | A-7 |
| Polymer (B) | | B-1 | B-1 | B-2 | B-2 | B-3 | B-3 | B-4 | B-4 | B-5 | B-5 | B-1 |
| (A)/(B) mass ratio | | 100/2.5 | 100/5.0 | 100/2.5 | 100/5.0 | 100/2.5 | 100/5.0 | 100/2.5 | 100/5.0 | 100/2.5 | 100/5.0 | 100/2.5 |
| Water repellency | PETT | 3+ | 3+ | 3 | 3 | 3+ | 3+ | 3 | 3 | 3 | 3- | 5- |
| | PETW | 5 | 5 | 5 | 5 | 5 | 4+ | 4 | 4 | 4 | 3+ | 5 |
| | NyT | 3+ | 3- | 3 | 3 | 3- | 3- | 3+ | 3 | 3- | 3- | 4 |
| Peel strength (N) | PETT | 8.6 | 7.6 | 7.6 | 8.2 | 8.4 | 7.4 | 7.2 | 8.8 | 8.6 | 8.0 | 8.8 |
| | NyT | 8.7 | 8.5 | 10.0 | 8.5 | 10.6 | 9.7 | 8.8 | 9.5 | 7.9 | 8.6 | 8.3 |

### (Ex. 2-1 to 2-10)

The emulsion of the copolymer (A) and the polymer (B) shown in Table 4 were mixed so that the mass ratio ((A)/(B)) in solid content would be the mass ratio as shown in Table 4, to obtain a water repellent composition. The water repellent composition was diluted with water to adjust the solid content concentration of the copolymer (A) to be 1.2 mass%, to obtain a treatment liquid.

A polyester taffeta or a nylon high density taffeta was immersed in the treatment liquid by a padding method, and then squeezed so that the wet pickup would, respectively, be 28 mass% or 50 mass%. This was heated at 170°C for 60 seconds, followed by aging overnight in a room at 25°C under a humidity of 60%, to obtain a test cloth for water repellency test. The water repellency is shown in Table 4.

A test cloth for peel strength test was obtained in the same manner as the test cloth for spray test. In the same manner as in Ex. 1-1 to 1-10, moisture-permeable waterproof film coated test cloths in Ex. 2-1 to 2-10 were obtained. The peel strength is shown in Table 4. Examples 2-1 and 2-6 are comparative.

**TABLE 4**

| | | Ex. | | | | | | | | | |
|---|---|---|---|---|---|---|---|---|---|---|---|
| | | 2-1 | 2-2 | 2-3 | 2-4 | 2-5 | 2-6 | 2-7 | 2-8 | 2-9 | 2-10 |
| Copolymer (A) | | A-2 | A-2 | A-2 | A-2 | A-2 | A-3 | A-3 | A-3 | A-3 | A-3 |
| Polymer (B) | | - | B-1 | B-1 | B-1 | B-1 | - | B-1 | B-1 | B-1 | B-1 |
| (A)/(B) mass ratio | | 100/0 | 100/0.125 | 100/0.25 | 100/0.5 | 100/1 | 100/0 | 100/0.125 | 100/0.25 | 100/0.5 | 100/1 |
| Water repellency | PETT | 5 | 5 | 4 | 3-4 | 3- | 5 | 5 | 4- | 3 | 3 |
| | NyT | 5 | 5 | 5 | 4 | 3-4 | 5 | 5 | 5 | 3-4 | 3 |
| Peel strength (N) | PETT | 4.6 | 8.8 | 7.7 | 8.8 | 8.9 | 5.2 | 8.1 | 8.6 | 9.8 | 8.3 |
| | NyT | 4.9 | 8.1 | 8.3 | 8.8 | 9.9 | 5.7 | 9.0 | 9.2 | 9.1 | 8.7 |

| | | | | | | | | | | | |
|---|---|---|---|---|---|---|---|---|---|---|---|
| PETT: polyester taffeta, NyT: nylon high density taffeta | | | | | | | | | | | |

### (Ex. 3-1 to 3-3)

The emulsion of the copolymer (A) shown in Table 5 is one obtained by polymerizing monomers in the presence of the polymer (B) and thus contains the polymer (B) in advance. Therefore, the emulsion of the copolymer (A) shown in Table 5 was used as it is, as a water repellent composition. The water repellent composition was diluted with water to adjust the solid content concentration of the copolymer (A) to be 0.5 mass% to obtain a treatment liquid.

A nylon high density taffeta was immersed in the treatment liquid by a padding method, and then squeezed so that the wet pick-up would be 50 mass%. This was heated at 170°C for 60 seconds, followed by aging overnight in a room at 25°C under a humidity of 60%, to obtain a test cloth for water repellency test. The water repellency is shown in Table 5.

The water repellent composition was diluted with water to adjust the solid content concentration of the copolymer (A) to be 1.2 mass% to obtain a treatment liquid.

A nylon high density taffeta was immersed in the treatment liquid by a padding method, and then squeezed so that the wet pick-up would be 50 mass%. This was heated at 170°C for 60 seconds, followed by aging overnight in a room at 25°C under humidity of 60% to obtain a test cloth for peel strength test.

Moisture permeable waterproof film coated test cloths in Ex. 3-1 to 3-3 were obtained in the same manner as in Ex. 1-1 to 1-10. The peel strength is shown in Table 5.

**TABLE 5**

| | | Ex. | | |
|---|---|---|---|---|
| | | 3-1 | 3-2 | 3-3 |
| Copolymer (A) | | A-4 | A-5 | A-6 |
| Polymer (B) | | B-5 | B-4 | B-5 |
| (A)/(B) mass ratio | | 100/1 | 100/2 | 100/2 |
| Water repellency | NyT | 4- | 4- | 3-4 |
| Peel strength (N) | NyT | 7.5 | 7.8 | 8.2 |

| | | | | |
|---|---|---|---|---|
| NyT: nylon high density taffeta | | | | |

### (Ex. 4-1 to 4-3) - comparative examples

The emulsion of the copolymer (C) and the polymer (B) shown in Table 6 were mixed so that the mass ratio in solid content ((C)/(B)) would be a mass ratio as shown in Table 6, to obtain a water repellent composition. The water repellent composition was diluted with water to adjust the solid content concentration of the copolymer (C) to be 5 mass% to obtain a treatment liquid.

A polyester taffeta or a nylon high density taffeta was immersed in the treatment liquid by a padding method, and then squeezed so that the wet pickup would, respectively, be 28 mass% or 50 mass%. This was heated at 170°C for 60 seconds, followed by aging overnight in a room at 25°C under a humidity of 60% to obtain a test cloth for water repellency test. The water repellency is shown in Table 6.

The water repellent composition was diluted with water to adjust the solid content concentration of the copolymer (C) to be 4 mass% to obtain a treatment liquid.

A polyester taffeta, a polyester woolly taffeta or a nylon high density taffeta was immersed in the treatment liquid by a padding method, and then squeezed so that the wet pick-up would, respectively, be 28 mass%, 70 mass% or 50 mass%. This was heated at 170°C for 60 seconds, followed by aging overnight in a room at 25°C under a humidity of 60% to obtain a test cloth for peel strength test.

Moisture permeable waterproof film coated test cloths in Ex. 4-1 to 4-3 were obtained in the same manner as in Ex. 1-1 to 1-10. The peel strength is shown in Table 6.

**TABLE 6**

| | | Ex. | | |
|---|---|---|---|---|
| | | 4-1 | 4-2 | 4-3 |
| Copolymer (C) | | C | C | C |
| Polymer (B) | | - | B-1 | B-1 |
| (C)/(B) mass ratio | | 100/0 | 100/0.5 | 100/1 |
| Water repellency | PETT | 5 | 5 | 5 |
| | NyT | 5 | 5 | 5 |
| Peel strength (N) | PETT | 4.6 | 4.7 | 4.8 |
| | PETW | 5.0 | 5.7 | 5.4 |
| | NyT | 3.7 | 4.6 | 4.7 |

| | | | | |
|---|---|---|---|---|
| PETT: polyester taffeta, PETW: polyester woolly taffeta, NyT: nylon high density taffeta | | | | |

By the test cloth obtained by being treated by the water repellent composition in each of Ex. 1-1 to 1-10, 2-2 to 2-5, 2-7 to 2-10, and 3-1 to 3-3 containing the copolymer (A) and the polymer (B), the water repellency was expressed. Further, the moisture permeable waterproof film was less likely to be peeled from the test cloth.

By the test cloth obtained by being treated by the water repellent composition in each of Ex. 2-1 and 2-6 containing the copolymer (A) and not containing the polymer (B), the moisture permeable waterproof film was likely to be peeled from the test cloth.

By the test cloth obtained by being treated by the water repellent composition in each of Ex. 4-1 to 4-3 containing the copolymer (C) as a fluorinated copolymer other than the copolymer (A), the moisture permeable waterproof film was likely to be peeled from the test cloth.

### INDUSTRIAL APPLICABILITY

The water repellent composition of the present invention is useful as a water repellent for fabrics (woven fabrics, knitted fabrics, nonwoven fabrics, etc.), various fiber products (clothing items (sportswears, coats, jackets, work clothes, uniforms, etc.), bags, industrial materials, etc.), etc.

## Claims

1. A water repellent composition **characterized by** comprising a copolymer (A) having structural units based on the following monomer (a) and structural units based on the following monomer (b), a polymer (B) having, as a pendant group, an amino group, an ammonium salt group or an amide group (but excluding the same one as the copolymer (A)), and an aqueous medium,
Monomer (a): a compound represented by the following formula (m1):
R^{F}-Q-Z-C(O)C(R)=CH₂ (m1).
wherein R^{F} is a C₄₋₆ perfluoroalkyl group, Q is a divalent hydrocarbon group having no fluorine atom, or a single bond, Z is -O- or NH-, and R is a hydrogen atom, a methyl group or a chlorine atom,
Monomer (b): a (meth)acrylate having no polyfluoroalkyl group and having a C₁₂₋₂₂ alkyl group;
wherein, in the polymer (B), the structural units based on a monomer having at least one type of group selected from the group consisting of an amino group, an ammonium salt group and an amide group are at least one type of structural units selected from the group consisting of the following structural units (u1) to (u17)

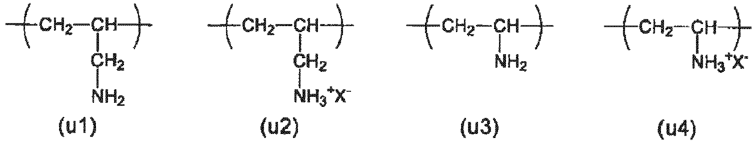

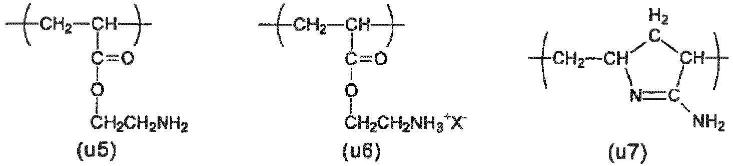

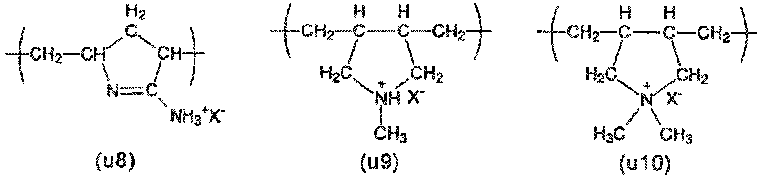

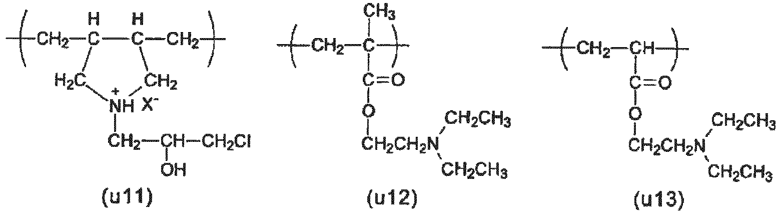

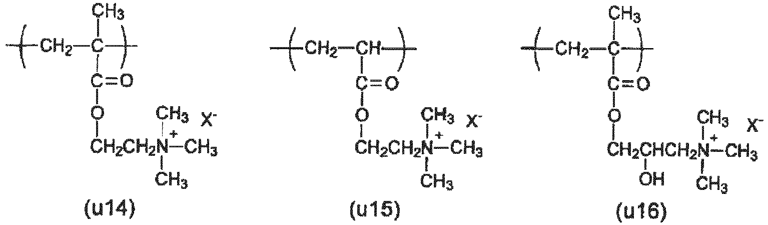

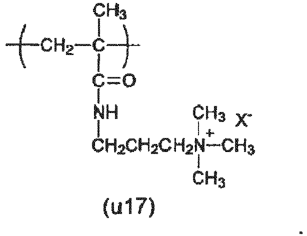

2. The water repellent composition according to Claim 1, wherein the mass ratio ((A)/(B)) of the copolymer (A) to the polymer (B) is from 100/0.01 to 100/10.

3. The water repellent composition according to Claim 1 or 2, wherein the proportion of the structural units based on the monomer (a) is from 5 to 95 mass% in all structural units (100 mass%) based on monomers constituting the copolymer (A).

4. The water repellent composition according to any one of Claims 1 to 3, wherein the proportion of the structural units based on the monomer (b) is from 5 to 95 mass% in all structural units (100 mass%) based on monomers constituting the copolymer (A).

5. The water repellent composition according to any one of Claims 1 to 4, wherein the mass average molecular weight of the polymer (A) is from 1,000 to 500,000.

6. The water repellent composition according to any one of Claims 1 to 5, wherein the mass average molecular weight of the polymer (B) is from 1,000 to 200,000.

7. The water repellent composition according to any one of Claims 1 to 6, wherein the monomer (a) is F(CF₂)₆CH₂CH₂OC(O)C(CH₃)=CH₂.

8. The water repellent composition according to any one of Claims 1 to 7, wherein the monomer (b) is stearyl (meth)acrylate or behenyl (meth)acrylate.

9. The water repellent composition according to any one of Claims 1 to 8, wherein the copolymer (A) further has structural units based on a monomer (c) of a halogenated olefin, and structural units based on a monomer (d) having a cross-linkable functional group.

10. The water repellent composition according to any one of Claims 1 to 9, which contains a non-ionic surfactant and a cationic surfactant.

11. The water repellent composition according to any one of Claims 1 to 10, wherein the aqueous medium is water, or a mixed medium of water and a water-soluble material.

12. The water repellent composition according to any one of Claims 1 to 11, wherein the solid content is from 10 to 40 mass% in the water repellent composition (100 mass%).

13. A treatment liquid of water repellent composition having water or another medium mixed to the water repellent composition as defined in any one of Claims 1 to 12.

14. The treatment liquid of water repellent composition according to Claim 13, wherein the solid content is from 0.1 to 8 mass% in the water repellent composition (100 mass%).

15. A process for producing a moisture permeable waterproof film coated article, comprising treating an article by the water repellent composition as defined in any one of Claims 1 to 12 to form a moisture permeable waterproof film on the surface of the article.

## Patentansprüche

1. Wasserabweisende Zusammensetzung, **dadurch gekennzeichnet, dass** sie ein Copolymer (A) mit Struktureinheiten auf der Basis des folgenden Monomers (a) und Struktureinheiten auf der Basis des folgenden Monomers (b), ein Polymer (B), das als Seitengruppe eine Aminogruppe, eine Ammoniumsalzgruppe oder eine Amidgruppe (jedoch nicht die gleiche wie das Copolymer (A)) aufweist, und ein wässriges Medium umfasst,
Monomer (a): eine Verbindung, dargestellt durch die folgende Formel (m1):
R^{F}-Q-Z-C(O)C(R)=CH₂ (m1).
wobei R^{F} eine C₄₋₆-Perfluoralkylgruppe ist, Q eine zweiwertige Kohlenwasserstoffgruppe, die kein Fluoratom aufweist, oder eine Einfachbindung ist, Z -O- oder NH- ist und R ein Wasserstoffatom, eine Methylgruppe oder ein Chloratom ist,
Monomer (b): ein (Meth)acrylat, das keine Polyfluoralkylgruppe aufweist und eine C₁₂₋₂₂-Alkylgruppe aufweist,
wobei im Polymer (B) die Struktureinheiten auf der Basis eines Monomers mit mindestens einem Typ einer Gruppe, ausgewählt aus der Gruppe, bestehend aus einer Aminogruppe, einer Ammoniumsalzgruppe und einer Amidgruppe, mindestens ein Typ von Struktureinheiten, ausgewählt aus der Gruppe, bestehend aus den folgenden Struktureinheiten (u1) bis (u17), sind

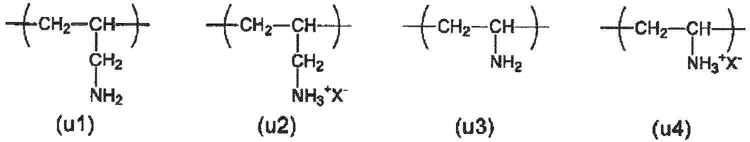

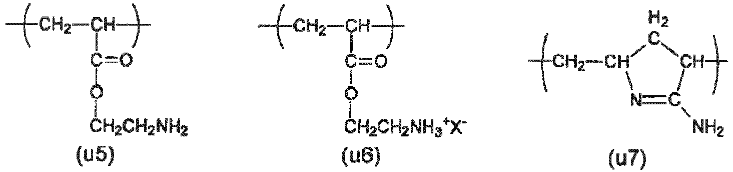

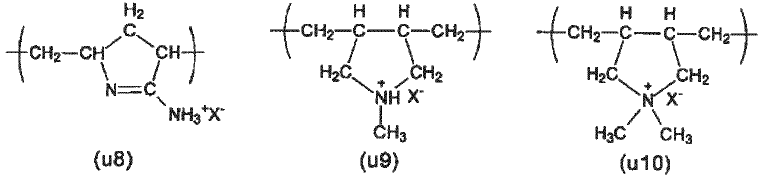

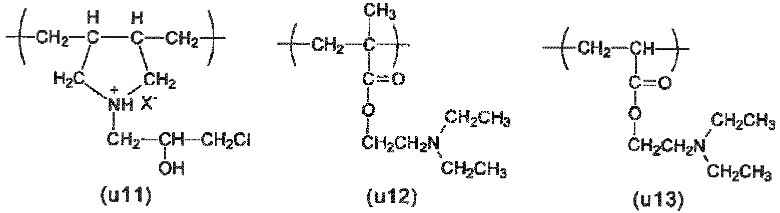

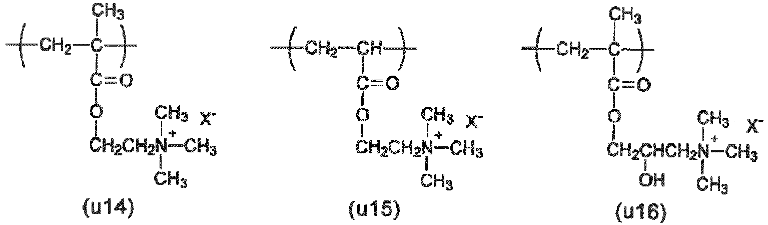

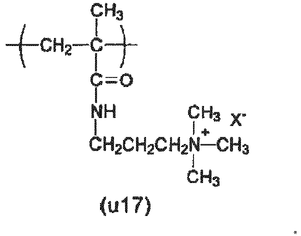

2. Wasserabweisende Zusammensetzung nach Anspruch 1, wobei das Massenverhältnis ((A)/(B)) des Copolymers (A) zu dem Polymer (B) von 100/0,01 bis 100/10 beträgt.

3. Wasserabweisende Zusammensetzung nach Anspruch 1 oder 2, wobei der Anteil der Struktureinheiten auf Basis des Monomers (a) von 5 bis 95 Massen-% an allen Struktureinheiten (100 Massen-%) auf Basis von Monomeren, die das Copolymer (A) bilden, beträgt.

4. Wasserabweisende Zusammensetzung nach einem der Ansprüche 1 bis 3, wobei der Anteil der Struktureinheiten auf Basis des Monomers (b) von 5 bis 95 Massen-% an allen Struktureinheiten (100 Massen-%) auf Basis von Monomeren, die das Copolymer (A) bilden, beträgt.

5. Wasserabweisende Zusammensetzung nach einem der Ansprüche 1 bis 4, wobei das Gewichtsmittel des Molekulargewichts des Polymers (A) von 1.000 bis 500.000 beträgt.

6. Wasserabweisende Zusammensetzung nach einem der Ansprüche 1 bis 5, wobei das Gewichtsmittel des Molekulargewichts des Polymers (B) von 1.000 bis 200.000 beträgt.

7. Wasserabweisende Zusammensetzung nach einem der Ansprüche 1 bis 6, wobei das Monomer (a) F(CF₂)₆CH₂CH₂OC(O)C(CH₃)=CH₂ ist.

8. Wasserabweisende Zusammensetzung nach einem der Ansprüche 1 bis 7, wobei das Monomer (b) Stearyl(meth)acrylat oder Behenyl(meth)acrylat ist.

9. Wasserabweisende Zusammensetzung nach einem der Ansprüche 1 bis 8, wobei das Copolymer (A) weiter Struktureinheiten auf Basis eines Monomers (c) eines halogenierten Olefins und Struktureinheiten auf Basis eines Monomers (d) mit einer vernetzbaren funktionellen Gruppe aufweist.

10. Wasserabweisende Zusammensetzung nach einem der Ansprüche 1 bis 9, die ein nichtionisches grenzflächenaktives Mittel und ein kationisches grenzflächenaktives Mittel enthält.

11. Wasserabweisende Zusammensetzung nach einem der Ansprüche 1 bis 10, wobei das wässrige Medium Wasser oder ein Mischmedium aus Wasser und einem wasserlöslichen Material ist.

12. Wasserabweisende Zusammensetzung nach einem der Ansprüche 1 bis 11, wobei der Feststoffgehalt von 10 bis 40 Massen-% in der wasserabweisenden Zusammensetzung (100 Massen-%) beträgt.

13. Behandlungsflüssigkeit einer wasserabweisenden Zusammensetzung mit Wasser oder einem anderen Medium, das der wasserabweisenden Zusammensetzung nach einem der Ansprüche 1 bis 12 beigemengt ist.

14. Behandlungsflüssigkeit einer wasserabweisenden Zusammensetzung nach Anspruch 13, wobei der Feststoffgehalt von 0,1 bis 8 Massen-% in der wasserabweisenden Zusammensetzung (100 Massen-%) beträgt.

15. Verfahren zur Herstellung eines Gegenstands, der mit einem feuchtigkeitsdurchlässigen wasserdichten Film beschichtet ist, umfassend das Behandeln eines Gegenstands mit der wasserabweisenden Zusammensetzung nach einem der Ansprüche 1 bis 12, um einen feuchtigkeitsdurchlässigen wasserdichten Film auf der Oberfläche des Gegenstands zu bilden.

## Revendications

1. Composition hydrofuge **caractérisée par le fait qu'**elle comprend un copolymère (A) comportant des unités structurelles basées sur le monomère (a) suivant et des unités structurelles basées sur le monomère (b) suivant, un polymère (B) comportant, en tant que groupe pendant, un groupe animé, un groupe sel d'ammonium ou un groupe amide (mais excluant le même que celui du copolymère (A)), et un milieu aqueux,
monomère (a) : un composé représenté par la formule (m1) suivante :
R^{F}-Q-Z-C(O)C(R)=CH₂ (m1),
dans laquelle R^{F} représente un groupe perfluoroalkyle en C₄ à C₆, Q représente un groupe hydrocarboné bivalent ne comportant pas d'atome de fluor, ou une liaison simple, Z représente -O- ou NH-, et R représente un atome d'hydrogène, un groupe méthyle ou un atome de chlore,
monomère (b) : un (méth)acrylate ne comportant pas de groupe polyfluoroalkyle et comportant un groupe alkyle en C₁₂ à C₂₂ ;
dans laquelle, dans le polymère (B), les unités structurelles basées sur un monomère comportant au moins un type de groupe sélectionné à partir du groupe constitué par un groupe animé, un groupe sel d'ammonium et un groupe amide, sont au moins un type d'unités structurelles sélectionné à partir du groupe constitué par les unités structurelles (u1) à (u17) suivantes :

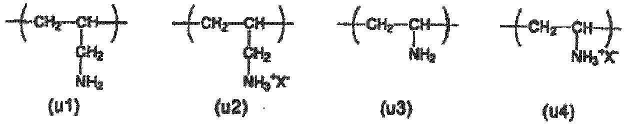

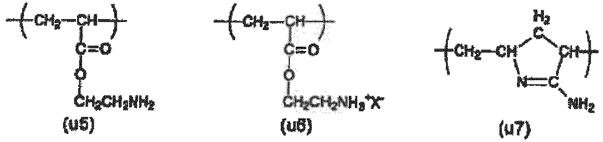

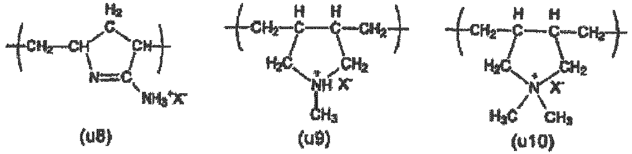

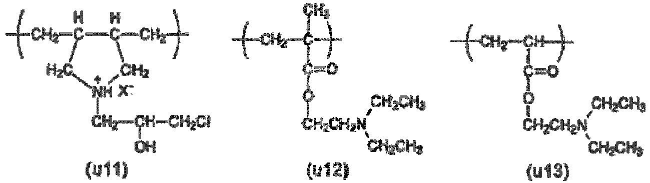

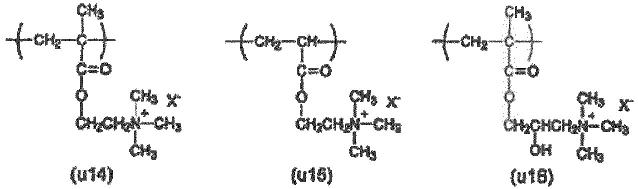

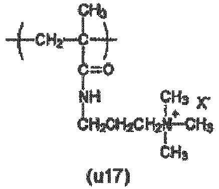

2. Composition hydrofuge selon la revendication 1, dans laquelle le rapport massique ((A)/(B)) du copolymère (A) sur le polymère (B) est compris entre 100/0,01 et 100/10.

3. Composition hydrofuge selon la revendication 1 ou 2, dans laquelle la proportion des unités structurelles basées sur le monomère (a) est comprise entre 5 et 95 % en masse dans toutes les unités structurelles (100 % en masse) sur la base des monomères constituant le copolymère (A).

4. Composition hydrofuge selon l'une quelconque des revendications 1 à 3, dans laquelle la proportion des unités structurelles basées sur le monomère (b) est comprise entre 5 et 95 % en masse sur toutes les unités structurelles (100 % en masse) sur la base des monomères constituant le copolymère (A).

5. Composition hydrofuge selon l'une quelconque des revendications 1 à 4, dans laquelle le poids moléculaire moyen en masse du polymère (a) est compris entre 1000 et 500 000.

6. Composition hydrofuge selon l'une quelconque des revendications 1 à 5, dans laquelle le poids moléculaire moyen en masse du -polymère (B) est compris entre 1000 et 200 000.

7. Composition hydrofuge selon l'une quelconque des revendications 1 à 6, dans laquelle le monomère (a) est F(CF₂)₆CH₂CH₂OC(O)C(CH₃)=CH₂.

8. Composition hydrofuge selon l'une quelconque des revendications 1 à 7, dans laquelle le monomère (b) est un (méth)acrylate de stéaryle ou un (méth)acrylate de béhényle.

9. Composition hydrofuge selon l'une quelconque des revendications 1 à 8, dans laquelle le copolymère (A) comporte, en outre, des unités structurelles basées sur un monomère (c) d'une oléfine halogénée, et des unités structurelles basées sur un monomère (d) comportant un groupe fonctionnel pouvant être réticulé.

10. Composition hydrofuge selon l'une quelconque des revendications 1 à 9, qui contient un surfactant non ionique et un surfactant cationique.

11. Composition hydrofuge selon l'une quelconque des revendications 1 à 10, dans laquelle le milieu aqueux est de l'eau, ou un milieu mélangé d'eau et d'un matériau soluble dans l'eau.

12. Composition hydrofuge selon l'une quelconque des revendications 1 à 11, dans laquelle le contenu solide est compris entre 10 et 40% en masse dans la composition hydrofuge (100 % en masse).

13. Liquide de traitement d'une composition hydrofuge comportant de l'eau ou un autre milieu mélangé à la composition hydrofuge selon l'une quelconque des revendications 1 à 12.

14. Liquide de traitement de composition hydrofuge selon la revendication 13, dans lequel le contenu solide est compris entre 0,1 et 8 % en masse dans la composition hydrofuge (100 % en masse).

15. Procédé de production d'un article revêtu d'un film imperméable à l'eau et perméable à l'humidité, comprenant le traitement d'un article par la composition hydrofuge selon l'une quelconque des revendications 1 à 12 afin de former un film imperméable à l'eau et perméable à l'humidité sur la surface de l'article.
